# EUROPEAN PATENT APPLICATION

(11) **EP 2 383 077 A2**
(43) Date of publication of application: **02.11.2011**
(21) Application number: 11164204.7
(22) Date of filing: 28.04.2011
(51) Int. Cl.: B25G 1/04, F16B 7/10

(54) **A multifunctional portable device for use with vehicles**

(30) Priority: 28.04.2010 GB 1007086
(71) Applicant: Connor, Harry, Harmony Hill Lisburn Antrim BT27 4HF (GB); Connor, Tracey, Harmony Hill Lisburn Antrim BT27 4HF (GB)
(72) Inventor: Connor, Harry, Lisburn, Antrim BT27 4HF (GB)
(74) Representative: Hanna, John Philip

(57) **Abstract**

A multifunctional portable device (1) for use by a single person with vehicles, the device (1) has a spacer arrangement (2) having a first end (3) and a second end (4). The spacer arrangement (2) being length adjustable, a first end (3) of the spacer arrangement (2) having an arrangement for coupling the spacer means to a component of a vehicle. A second end of the spacer arrangement (2) having an attachment member (6, 51). The spacer arrangement (2) having a telescopic pole (9) having two pole members (10, 11) movable relative to one another. The telescopic pole (9) has a telescopic pole fixing and releasing assembly (14, 34) for fixing the location of the two pole members (10, 11) relative to one another and allowing the two pole members (10, 11) to slide relative to one another wherein rotational or longitudinal relative movement between the two pole members (10, 11) activates the telescopic pole fixing and releasing arrangement (14, 34).

## Description

The present invention relates to a multifunctional portable device for use with vehicles and in particular to a multipurpose portable device to enable a driver to check their own brake lights by themselves, to clean the vehicle mirrors, to clear ice from surfaces and to adjust the position of load holding straps.

For safety reasons, long distance lorry drivers are legally required to ensure that their brake lights are working correctly before setting off in their vehicle each day. Long distance lorry drivers and other people who drive to earn a living often travel on their own, so to check their brake lights, they ask the driver of another lorry to watch their lights while they press the brake pedal in the cab of the vehicle. This arrangement is fine when the lone lorry driver is parked at a busy truck stop, lorry park or transport café for lorry drivers. However, it is often the case that lorry drivers are forced to park by themselves overnight especially when lorry drivers are working in remote locations. In this instance it is difficult if not impossible for the driver to test the brake lights of the vehicle without devising a make shift weight to depress the brake pedal. Another legal requirement for lorry drivers is to check their brake systems for leaks or air locks. Again it is necessary for the driver to get another person to depress the brake pedal while the driver listens around the vehicle for a hissing sound indicating a leak. If a second person is not available the driver has to construct a make shift weight to test the brakes. These devices are unreliable as the driver is uncertain that a sufficient constant pressure is being applied to the brake pedal to carry out a useful check.

Similar problems arise for millions of drivers every year when checking their vehicles for the MOT vehicle road worthiness test. It is possible for the vehicle owner to conduct a lot of the simple tests for themselves prior to taking the vehicle to the MOT test centre. One of the necessary tests is checking to ensure that the brake lights are working. This generally involves a person on their own trying to position a brick or some similar weight on the brake pedal to keep the brake pedal depressed while they go to the back of the vehicle to check that the lights are functioning properly. There is no way of ensuring that the brick will remain on the pedal when the person goes to the back of the vehicle or indeed that the brick or similar weight can be orientated to apply sufficient pressure to the pedal to cause the light to go and stay on.

Furthermore, drivers of commercial vehicles such as buses, trucks and articulated lorries have a range of wing mirrors which are located high up on the vehicle for providing the best view aft of the drivers position to provide the driver with the best information about what is going on behind and laterally of their own vehicle. These mirrors should be cleaned regularly for safety purposes as their view is easily obscured by rain, dirt and flies. Cleaning these mirrors generally involves the driver of the vehicle using of a set of steps at home or borrowed from a commercial premises on route. Again, it is not always possible to obtain the necessary steps when the problem of dirty mirrors arise. Furthermore, in cold conditions, ice gathering on the outside surface of both the windscreen and the mirrors can be difficult to clear because of the elevated position of these parts of the vehicle. In particular, to allow safe use of the windscreen wipers and a full view from the wing mirrors, the ice must be cleared right to the top of both of these vehicle parts. Again, because of the elevated positions of these parts of the vehicle, clearing the ice is a difficult proposition unless the driver is at home and has the suitable steps and ice scraper equipment readily available.

A further problem associated with single drivers occurs where the driver is trying to position straps used to tie down loads on a trailer. Loads on trailers are traditionally tied down using a number of straps spaced apart along the length of the trailer with one end of the strap fixed on one side of the load. The free end of the strap is then thrown over the top of the load and the other end of the strap is fixed to the other side of the lorry and generally tightened down using a ratchet winch. The problem arises where the strap catches on top of the load and the driver is unable to move the strap along the load to the desired location without climbing up onto the load.

It is an object of the present invention to obviate or mitigate the problems associated with individuals checking brake lights on their own, cleaning dirty mirrors, clearing ice from mirrors and windscreens and adjusting the longitudinal position of straps securing a load on a trailer on their own.

Accordingly, the present invention provides a multifunctional portable device for use by a single person with vehicles, the device comprising spacer means having a first end and a second end, the spacer means being length adjustable, a first end of the spacer means comprising a means for coupling the spacer means to a component of a vehicle, a second end of the spacer means comprising attachment means, the spacer means comprising a telescopic pole having two pole members movable relative to one another, the telescopic pole having telescopic pole fixing and releasing means for fixing the location of the two pole members relative to one another and allowing the two pole members to slide relative to one another wherein rotational or longitudinal relative movement between the two pole members activates the telescopic pole fixing and releasing means.

Advantageously, the telescopic pole is fixed at the desired operational length automatically as a result of longitudinal or rotational relative movement between the pole members. By automatic, we mean that the telescopic pole is pulled and/or twisted into the relevant operational length. The locking of the telescopic pole is instantaneous for the user i.e. no further locking or length fixing action is required using separate locking pins, screws or additional components outside of the telescopic pole and the telescopic pole fixing and releasing means.

In a first embodiment, the attachment means comprises a second means for coupling the spacer means to another component of the vehicle so that length adjustment of the spacer means clamps the first and second coupling means to the components of the vehicle for exerting compressive force on the vehicle components. Advantageously, the length adjustment of the telescopic pole is suitable for causing a brake pedal to be depressed as a steering wheel is fixed and the fixing of the telescopic pole at the operational length sustains the force on the brake pedal. This allows a person to leave the interior of the vehicle with the brake pedal securely depressed and go to the rear of the vehicle to check that the brake lights are correctly lighting and/or that there are no leaks in the bake system.

In the first embodiment, the attachment means comprises means for detachably receiving one or more heads.

In the first embodiment, the means for detachably receiving one or more heads comprises a shaft having an internal threaded bore for receiving a threaded shaft of the one or more heads.

In the first embodiment, the shaft having the internal threaded bore for detachably receiving one or more heads is the same component as the second coupling means.

In a second embodiment, the attachment means comprises an attachment member adapted for detachably receiving one or more heads.

Preferably, the attachment member comprises a tubular housing having at least one radially adjustable catch member protruding through an aperture in the wall of the tubular housing radially inwardly into the open space defined by the tubular housing and a collar enclosing the tubular housing and being contactable with the at least one radially adjustable catch member, the collar having two end positions along the length of the tubular housing and being movable there between, a first end position where the collar rests normally under the influence of a biasing means engaging the at least one catch member and forcing it into the open space of the tubular housing for preventing one of the heads from being removed and a second position where the collar is pressable by an operator to overcome the force of the biasing means, the collar being disengageable from the at least on catch member so that the catch member is moveable out of the tubular housing for allowing one of the heads to be added or removed.

Ideally, the biasing means acting on the collar is a spring.

Preferably, three catch members are provided on the tubular housing equi-spaced angularly around the circumference of the tubular housing. Advantageously, the three equi-spaced catch members provide the attachment member with greater stability and strength.

Ideally, the telescopic pole fixing and releasing means is engineered into the telescopic pole. The telescopic pole fixing and releasing means creates one of the most important technical features in the multifunctional portable device which is the automatic locking of the length of the telescopic pole at the operational length. An additional benefit is the associated quick release of the mechanism when use of the device is completed.

Ideally, one means for coupling the spacer means to a component of the vehicle comprises a vehicle steering wheel engaging head.

Preferably, the vehicle steering wheel engaging head is a tubular component having one end formed for engagement with a pole member or an attachment member and a free end having a contoured recess for engaging the steering wheel.

Ideally, the contoured recess is provided with a threaded bore for receiving a threaded shaft of a head.

Preferably, a head for cleaning wing mirrors is provided for operable engagement with the attachment means.

Ideally, the head for cleaning windows has an elongate sponge mounted on a shaft.

Preferably, the head for cleaning windows has an elongate wiper blade mounted on the shaft.

Ideally, the elongate sponge and elongate wiper blade are mounted in a back to back configuration on the shaft.

Preferably, a head for scraping ice from wing mirrors and windscreens is provided for operable engagement with the attachment means.

Ideally, the head for scraping ice has an elongate rigid scraper blade mounted on a shaft.

Preferably, a head for adjusting the position of straps is provided for operable engagement with the attachment means.

Ideally, a free end of a shaft of the one or more heads has a threaded portion for operable engagement with a threaded bore of the device.

Alternatively, a free end of a shaft of the one or more heads has an adapter for operable engagement with the attachment member of the device.

Preferably, the adapter has a tubular body with an enlarged diameter portion formed for operable engagement with the one or more catch members.

Preferably, the other means for coupling the spacer means to another component of the vehicle comprises a component for engaging a brake pedal.

Ideally, the component for engaging the brake pedal comprises a blind rubber tubular member having a first end for engaging a pole member and a second end having an uneven surface. Advantageously, the uneven surface improves grip between the rubber tubular member and the brake pedal.

Preferably, the uneven surface is provided by a plurality of studs protruding from an end face of the blind tubular member.

Ideally, the telescopic pole acts as a strut between the vehicle steering wheel and the vehicle brake pedal. Advantageously, the length adjustment of the telescopic pole causes the brake pedal to be depressed because the steering wheel is fixed and the fixing of the telescopic pole at the operational length sustains the force on the brake pedal. This allows a person to leave the interior of the vehicle with the brake pedal securely depressed and go to the rear of the vehicle to check that the brake lights are correctly lighting and that there are no leaks or air locks in the system.

Preferably, the spacer means comprises two hollow tubular poles.

Ideally, the two hollow tubular poles are cylindrical.

Preferably, the first hollow tubular pole has a greater diameter than the second hollow tubular pole and the second hollow tubular pole is placed inside the first hollow tubular pole for slidable engagement therewith.

Ideally, the first hollow tubular pole has a spring loaded pin on each side of the tube protruding from the walls of the tube at diametrically opposed locations.

Preferably, the second hollow tubular pole has means for releasable engagement with the spring loaded pins.

Ideally, the means for releasable engagement is provided by longitudinally spaced apart pairs of mutually opposing openings in the second hollow tubular pole formed for aligning with and receiving the pins.

The spring loaded pins provide the technical effect of snapping the spacer means to the correct length and quick press release simplifies the process and increases the functionality of the multifunctional portable device.

In a second embodiment of telescopic pole fixing and releasing means, a first hollow tubular pole being the first pole member has a tubular housing fitted on one end having a rocking lever locking pin disposed within the housing for operable engagement with the second hollow tubular pole being the second pole member.

Ideally, the rocking lever locking pin comprises a lever pivotally mounted about a fulcrum on the housing between the two ends of the lever.

Preferably, the lever extends longitudinally along the outside of the second pole member and is normally biased into operable engagement with the second pole member.

Preferably, the second pole member is formed for sliding through the tubular housing.

Ideally, the lever has a locking pin at or about one end and the second pole member has spaced apart apertures formed for aligning with and receiving the locking pin.

Preferably, the second hollow tubular pole has means for releasable engagement with the locking pin.

Ideally, the means for releasable engagement of the second hollow tubular pole is provided by spaced apart apertures in the second hollow tubular pole formed for aligning with and receiving the locking pin.

Preferably, the tubular housing has an external actuation member movably mounted therein, the external actuation member being movable into contact with the opposite end of the lever to the locking pin.

Advantageously, the external actuation member is accessible from the outside of the tubular housing. Advantageously, by pressing the actuation member of the rocking lever locking pin, the locking pin is disengaged from the apertures by pivoting about a fulcrum to withdraw the locking pin out of contact with the second hollow tubular member.

Ideally, the rocking lever locking pin is normally biased into contact with the second pole member.

The rocking lever locking pin also provides the technical effect of snapping the spacer means to the correct length and a quick press release simplifies the process and increases the functionality of the multifunctional portable device.

In a third embodiment of telescopic pole fixing and releasing means, a twist lock mechanism is provided between the two telescopic pole members.

Ideally, the twist lock mechanism comprises a tubular housing enclosing a joint between the two telescopic poles and a cam provided on the first hollow tubular member in operable engagement with a gripping member movably mounted on the housing between two positions, a first inoperable position where the gripping member is out of contact with the second hollow tubular member to allow relative longitudinal movement between the two telescopic pole members and a second operable position where the gripping member is moveable into contact with the second hollow tubular member by the cam as a user rotates the hollow tubular members relative to one another thereby preventing their relative longitudinal movement.

Advantageously, by relatively rotating the poles in only one direction locking is accomplished and by relatively rotating the poles in just the opposite direction unlocking is effected. The overall end-to-end length of the pole members of the telescopic pole can be adjusted by unlocking them, sliding one axially relative to the other and then locking them again.

Preferably, the telescopic pole members are manufactured from aluminium or glass reinforced plastic.

Ideally, the minimum overall length of the portable device is 500 mm

Ideally, the minimum overall length of the portable device is 600 mm.

Preferably, the minimum overall length of the portable device is 545 mm.

Ideally, the maximum overall length of the portable device is 800 mm.

Ideally, the maximum overall length of the portable device is 900 mm.

Preferably, the maximum overall length of the portable device is 865 mm.

Accordingly, the present invention provides a portable device for checking that a brake light is operational by a single person comprising spacer means having a first end and a second end, the spacer means being length adjustable, a first end of the spacer means comprising a means for coupling the spacer means to a component of a vehicle, a second end of the spacer means comprising a second means for coupling the spacer means to another component of the vehicle so that length adjustment of the spacer means clamps the first and second coupling means to the components of the vehicle, the spacer means comprising a telescopic pole having two pole members movable relative to one another, the telescopic pole having telescopic pole fixing and releasing means for fixing the location of the two pole members relative to one another and allowing the two pole members to slide relative to one another wherein rotational or longitudinal relative movement between the two pole members activates the telescopic pole fixing and releasing means.

The invention will now be described with reference to the accompanying drawings which shows by way of example only two embodiments of a multifunctional portable device in accordance with the invention. In the drawings:

Figure 1 is an elevation view of a first embodiment of a multifunctional portable device for one person to test vehicle brake lights or leaks or air locks in the brake system;

Figure 2 is a second elevation view of the first embodiment of multifunctional portable device;

Figure 3 is a plan view of a second embodiment of a multifunctional portable device;

Figure 4 is a side elevation view of the second embodiment of multifunctional portable device.

Figure 5 is a section view taken along lines A-A of Figure 4;

Figure 6 is a first perspective view of the multifunctional portable device of Figures 1 and 2 in a collapsed condition;

Figure 7 is a second perspective view of the multifunctional portable device of Figures 1, 2 and 6 in an extended configuration;

Figure 8 is a first perspective view of the multifunctional portable device of Figures 3 and 4 in a collapsed condition;

Figure 9 is a second perspective view of the multifunctional portable device of Figures 3, 4 and 8 in an extended configuration;

Figure 10 is a first perspective view of a multifunctional portable device for cleaning mirrors and windscreens; and

Figure 11 is a second perspective view of the multifunctional portable device for cleaning mirrors and windscreens;

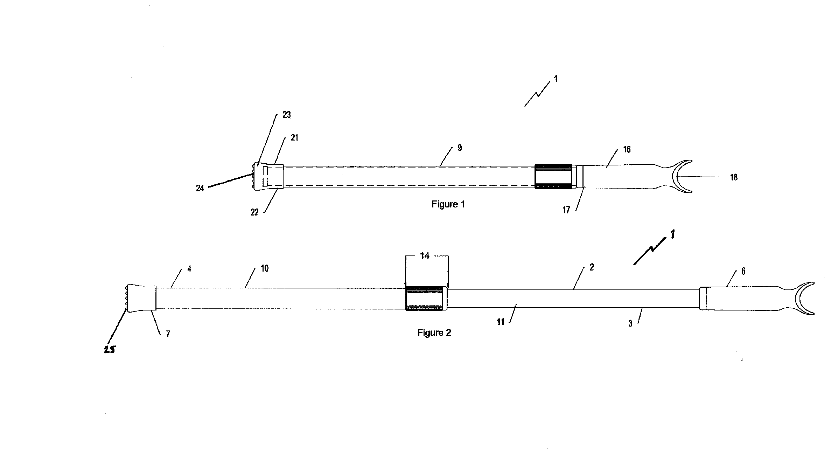

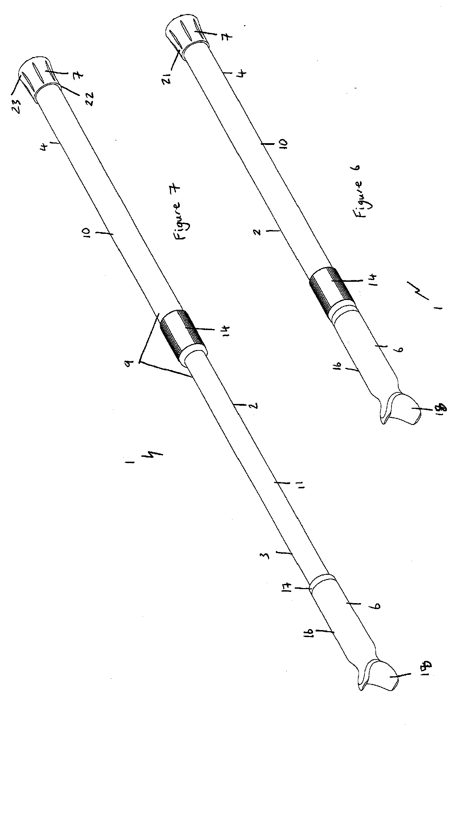

In the drawings, there is shown a multifunctional portable device indicated generally by the reference numeral 1 for use with vehicles by an individual. The device shown in Figures 1, 2, 6 and 7 is configured to check that a vehicles' brake lights or braking system are operational. The portable device 1 has a spacer arrangement 2 having a first end 3 and a second end 4 where the spacer arrangement 2 is length adjustable. The first end 3 of the spacer arrangement 2 has a member 6 for coupling the spacer arrangement 2 to a component of a vehicle not shown. The second end 4 of the spacer arrangement 2 has a second member 7 for coupling the spacer arrangement 2 to another component of the vehicle so that length adjustment of the spacer arrangement 2 clamps the first and second coupling members 6, 7 to the components of the vehicle. The spacer arrangement 2 is a telescopic pole 9 having two pole members 10, 11 movable relative to one another. The telescopic pole 9 has telescopic pole fixing and releasing arrangement 14 for fixing the location of the two pole members 10, 11 relative to one another and allowing the two pole members 10, 11 to slide relative to one another. In use, rotational or longitudinal relative movement between the two pole members 10, 11 activates the telescopic pole fixing and releasing arrangement 14.

Advantageously, the telescopic pole 9 is fixed at the desired operational length automatically as a result of longitudinal or rotational relative movement between the pole members 10, 11 which creates the compressive exerting force on the vehicle components. By automatic, we mean that the telescopic pole 9 is pulled and/or twisted into the relevant operational length for exerting the compressive force on the vehicle components. The locking of the telescopic pole 9 is instantaneous for the user i.e. no further locking or length fixing action is required using separate locking pins, screws or additional components outside of the telescopic pole 9 and the telescopic pole fixing and releasing arrangement 14.

The telescopic pole fixing and releasing arrangement 14 is engineered into the telescopic pole 9. The telescopic pole fixing and releasing arrangement 14 creates one of the most important technical features in the multifunctional portable device 1 which is the automatic locking of the length of the telescopic pole 9 at the operational length to exert a compressive force on the brake pedal. An additional benefit is the associated quick release of the telescopic pole fixing and releasing arrangement 14 from the vehicle when the test is completed. The member 6 for coupling the spacer arrangement 2 to a component of the vehicle is a vehicle steering wheel engaging member 6 provided by a tubular component 16 having one end 17 formed for engagement with a pole member 11 and a free end having a contoured recess 18 for engaging the steering wheel. The tubular component 16 is also adapted for detachably receiving one or more heads. The tubular component 16 has an internal threaded bore (not shown) located on the contoured recess 18 for receiving a threaded shaft of one or more heads. The other member 7 for coupling the spacer arrangement 2 to another component of the vehicle comprises a component 7 for engaging a brake pedal.

The component 7 for engaging the brake pedal comprises a blind rubber tubular member 21 having a first end 22 for engaging a pole member 10 and a second end 23 having an uneven surface 24. Advantageously, the uneven surface 24 improves grip between the blind rubber tubular member 21 and the brake pedal. The uneven surface 24 is provided by a plurality of studs 25 protruding from an end face of the blind tubular member 21. The telescopic pole 9 acts as a strut between the vehicle steering wheel and the vehicle brake pedal. Advantageously, the length adjustment of the telescopic pole 9 causes the brake pedal to be depressed as the steering wheel is fixed and the fixing of the telescopic pole 9 at the operational length sustains the force on the brake pedal. This allows a person to leave the interior of the vehicle with the brake pedal securely depressed and go to the rear of the vehicle to check that the brake lights are correctly lighting and to check that no leaks or air locks are detectable in the brake system. The telescopic pole 9 has two hollow tubular poles 10, 11 which are cylindrical in the embodiment shown in Figures 1, 2, 6 and 7. The first hollow tubular pole 10 has a greater diameter than the second hollow tubular pole 11 and the second hollow tubular pole 11 is placed inside the first hollow tubular pole 10 for slidable engagement therewith. In this embodiment, the telescopic pole fixing and releasing arrangement 14 is provided by a twist lock mechanism 14 mounted between the two telescopic pole members 10, 11. The relative rotation of the two overlapping telescopic poles 10, 11 causes a gripping member to operably engage both telescopic poles 10, 11 via a cam on one telescopic pole thereby preventing their relative longitudinal movement.

Advantageously, by relatively rotating the telescopic pole members 10, 11 in only one direction locking is accomplished and by relatively rotating the telescopic pole members 10, 11 in just the opposite direction unlocking is effected. The overall end-to-end length of the telescopic pole members 10, 11 can be adjusted by unlocking them, sliding one axially relative to the other and then locking them again.

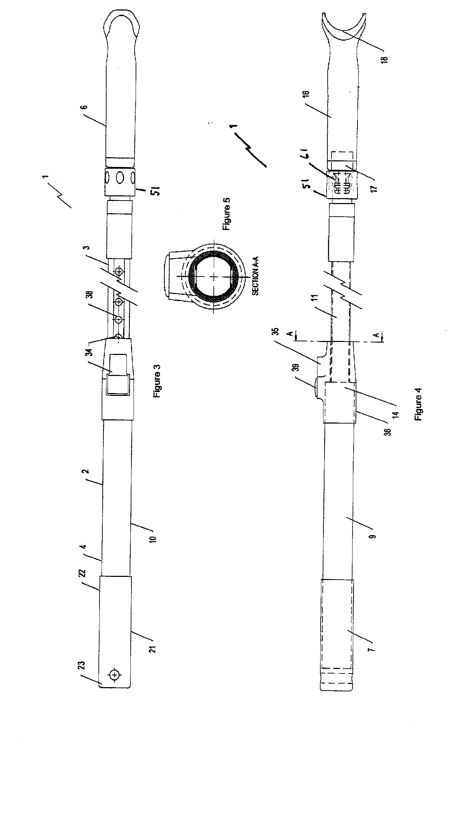

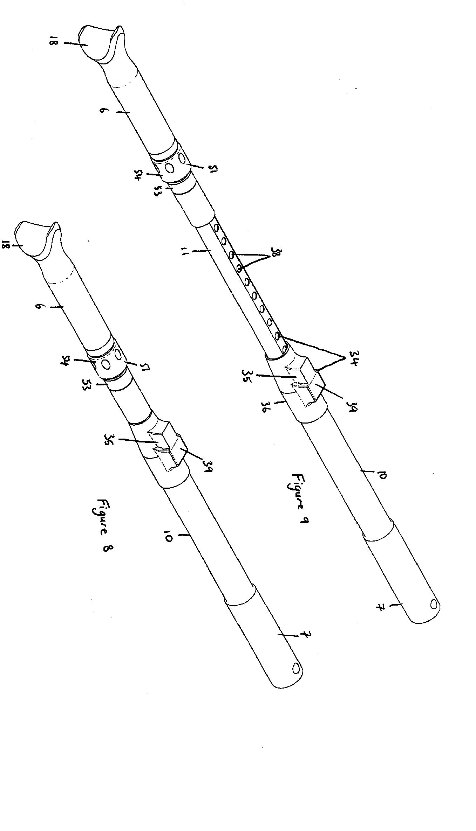

Referring more specifically to Figures 3, 4, 5, and 8 to 11, a further embodiment of telescopic pole fixing and releasing arrangement 34 is provided by a rocking lever locking pin and aperture arrangement 34. The second hollow tubular pole 10 has a rocking lever locking pin 35 built into a tubular housing 36 mounted on one end of the second hollow tubular pole 10. The first hollow tubular pole 11 has an arrangement 38 for releasable engagement with the rocking lever locking pin 35. The arrangement 38 for releasable engagement is provided by spaced apart apertures 38 in the first hollow tubular pole 11 formed for aligning with and receiving the rocking lever locking pin 35. The locking lever locking pin 35 is normally biased into contact with apertures 38. The rocking lever locking pin 35 has an external actuation member 39. Advantageously, by pressing the actuation member 39 of the rocking lever locking pin 35, the locking pin 35 is disengaged from the apertures 38 by the action of the rocking lever locking pin 35 pivoting about a fulcrum to withdraw the locking pin 35 out of an aperture 38 and thereby out of contact with the first hollow tubular member 11. The rocking lever locking pin 35 can be a plastic moulded part formed for mounting inside the tubular housing 36. Alternatively, a simple see-saw biased lever arrangement can be assembled within the tubular housing 36.

The rocking lever locking pin 35 also provides the technical effect of snapping the spacer arrangement 2 to the correct length and a quick press release simplifies the process and increases the functionality of the portable device 1.

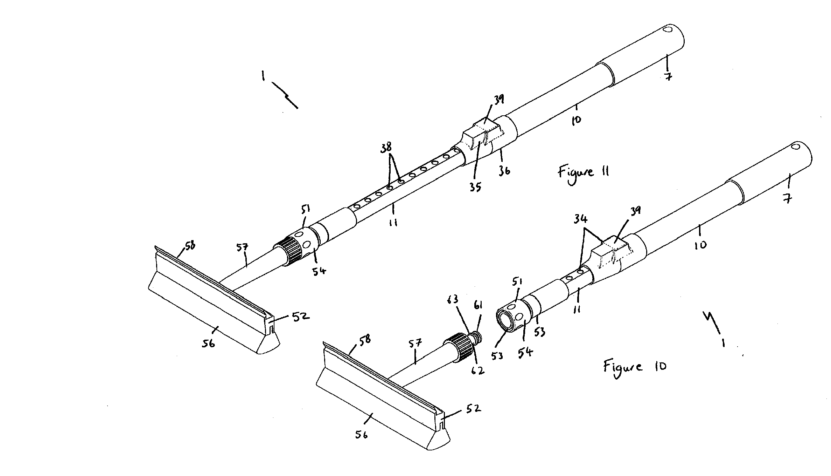

In the second embodiment illustrated in Figures 3, 4, 5 and 8 to 11, an attachment member 51 is shown adapted for detachably receiving one or more heads namely coupling member 6 shown in Figures 3, 4, 8 and 9 and mirror cleaning head 52 shown in Figures 10 and 11. The attachment member 51 comprises a tubular housing 53 see Figure 10 having three radially adjustable catch members (not shown) protruding through three apertures in the wall of the tubular housing 53 radially inwardly into the open space defined by the tubular housing 53. A spring loaded collar 54 encloses the tubular housing 53 and is in contact with the three radially adjustable catch members. The collar 54 has two end positions along the length of the tubular housing 53 and is movable between the two positions. A first end position is shown in all of the drawings where the collar 54 rests normally under the influence of a spring engaging the three catch members and forcing them into the open space of the tubular housing 53 for preventing one of the heads 6, 52 from being removed. The collar 54 has a second position where the collar 54 is pressed by an operator to overcome the force of the spring, the collar 54 being disengaged from the catch members so that the catch members can move out of the tubular housing 53 for allowing one of the heads 6, 52 to be added or removed.

The three catch members is an exemplary number and it will of course be appreciated that any number of catch members can be provided. The three catch members are provided on the tubular housing 53 equi-spaced angularly around the circumference of the tubular housing 53. Advantageously, the three equi-spaced catch members provide the attachment member 51 with greater stability and strength.

Referring to the drawings and now to Figures 10 and 11, the head 52 for cleaning wing mirrors is provided for operable engagement with the attachment member 51. The head 52 for cleaning windows has an elongate sponge 56 mounted on a shaft 57. The head 52 also has an elongate wiper blade 58 mounted on the shaft 57. The elongate sponge 56 and elongate wiper blade 58 are mounted in a back to back configuration on the shaft 57.

A free end of a shaft 57 of the heads 6, 52 has an adapter 61 for operable engagement with the attachment member 51 of the device 1. The adapter 61 has a tubular body 62 with an enlarged perimeter and preferably diameter portion 63 formed for operable engagement with the catch members of the attachment member 51.

In an embodiment not shown in the drawings, a head for scraping ice from wing mirrors and windscreens is provided for operable engagement with the attachment member having an elongate rigid scraper blade mounted on a shaft. In a further embodiment of head not shown in the drawings, a head for adjusting the position of straps is provided for operable engagement with the attachment member.

The telescopic pole members 10, 11 are manufactured from aluminium or glass reinforced plastic. The minimum overall length of the portable device 1 is in the range of 500 mm to 600 mm with the most preferred minimum overall length of the portable device being 545 mm. The maximum overall length of the portable device 1 is in the range of 800 mm to 900 mm with the most preferred maximum overall length of the portable device being 865 mm.

In a further embodiment of telescopic pole fixing and releasing arrangement not shown in the drawings, the first hollow tubular pole has a spring loaded pin on each side of the tube protruding from the walls of the tube at diametrically opposed locations. The second hollow tubular pole has pairs of mutually opposing openings in the second hollow tubular pole formed for aligning with and receiving the pins. The spring loaded pins provide the technical effect of snapping the spacer arrangement to the correct length and quick press release simplifies the process and increases the functionality of the portable device. This embodiment operates on a similar principle to the length adjustment of a crutch.

In relation to the detailed description of the different embodiments of the invention, it will be understood that one or more technical features of one embodiment can be used in combination with one or more technical features of any other embodiment where the transferred use of the one or more technical features would be immediately apparent to a person of ordinary skill in the art to carry out a similar function in a similar way on the other embodiment.

In the preceding discussion of the invention, unless stated to the contrary, the disclosure of alternative values for the upper or lower limit of the permitted range of a parameter, coupled with an indication that one of the said values is more highly preferred than the other, is to be construed as an implied statement that each intermediate value of said parameter, lying between the more preferred and the less preferred of said alternatives, is itself preferred to said less preferred value and also to each value lying between said less preferred value and said intermediate value.

The features disclosed in the foregoing description or the following drawings, expressed in their specific forms or in terms of a means for performing a disclosed function, or a method or a process of attaining the disclosed result, as appropriate, may separately, or in any combination of such features be utilised for realising the invention in diverse forms thereof as defined in the appended claims.

## Claims

1. A multifunctional portable device (1) for use by a single person with vehicles, the device (1) comprising spacer means (2) having a first end (3) and a second end (4), the spacer means (2) being length adjustable, a first end (3) of the spacer means (2) comprising a means for coupling the spacer means to a component of a vehicle, a second end of the spacer means (2) comprising attachment means (6, 51), the spacer means (2) comprising a telescopic pole (9) having two pole members (10, 11) movable relative to one another, the telescopic pole (9) having telescopic pole fixing and releasing means (14, 34) for fixing the location of the two pole members (10, 11) relative to one another and allowing the two pole members (10, 11) to slide relative to one another wherein rotational or longitudinal relative movement between the two pole members (10, 11) activates the telescopic pole fixing and releasing means (14, 34).

2. A multifunctional portable device (1) as claimed in claim 1, wherein the telescopic pole fixing and releasing means (34) comprises the first pole member (10) having a tubular housing (36) on one end having a rocking lever locking pin (35) disposed within the housing (36) for operable engagement with the second pole member (11).

3. A multifunctional portable device (1) as claimed in claim 2, wherein the rocking lever locking pin (35) comprises a lever pivotally mounted about a fulcrum on the housing (36) between the two ends of the lever.

4. A multifunctional portable device (1) as claimed in claim 3, wherein the lever extends longitudinally along the outside of the second pole member (11) and is normally biased into operable engagement with the second pole member (11).

5. A multifunctional portable device (1) as claimed in any one of claims 2 to 4,
wherein the lever has a locking pin at or about one end and the second hollow tubular member (11) has spaced apart apertures (38) formed for aligning with and receiving the locking pin.

6. A multifunctional portable device (1) as claimed in claim 5, wherein the tubular housing (36) has an external actuation member (39) movably mounted therein, the external actuation member (39) being movable into contact with the opposite end of the lever to the locking pin.

7. A multifunctional portable device (1) as claimed in claim 1, wherein the telescopic pole fixing and releasing means (14) comprises a twist lock mechanism (14) provided between the two telescopic pole members (10, 11).

8. A multifunctional portable device (1) as claimed in claim 7, wherein the twist lock mechanism (14) comprises a tubular housing enclosing a joint between the two telescopic poles (10, 11) and a cam provided on the first pole member (10) in operable engagement with a gripping member movably mounted on the housing between two positions, a first inoperable position where the gripping member is out of contact with the second pole member (11) to allow relative longitudinal movement between the two telescopic pole members (10, 11) and a second operable position where the gripping member is moveable into contact with the second pole (11) member by the cam as a user rotates the pole members (10, 11) relative to one another thereby preventing their relative longitudinal movement.

9. A multifunctional portable device (1) as claimed in any one of the preceding claims, wherein the attachment means (6) comprises a second means for coupling the spacer means (2) to another component of the vehicle so that length adjustment of the spacer means (2) clamps the first and second coupling means to the components of the vehicle for exerting compressive force on the vehicle components.

10. A multifunctional portable device (1) as claimed in claim 9, wherein the attachment means (6) comprises means for detachably receiving one or more heads (52).

11. A multifunctional portable device (1) as claimed in claim 10, wherein the means for detachably receiving one or more heads (52) comprises a shaft having an internal threaded bore for receiving a threaded shaft of one or more heads (52).

12. A multifunctional portable device (1) as claimed in any one of claims 1 to 9, wherein the attachment means comprises an attachment member (51) adapted for detachably receiving one or more heads (6, 52).

13. A multifunctional portable device (1) as claimed in claim 12, wherein the attachment member (51) comprises a tubular housing (53) having at least one radially adjustable catch member protruding through an aperture in the wall of the tubular housing (53) radially inwardly into the open space defined by the tubular housing (53) and a collar (54) enclosing the tubular housing (53) and being contactable with the at least one radially adjustable catch member, the collar (54) having two end positions along the length of the tubular housing (53) and being movable there between, a first end position where the collar (54) rests normally under the influence of a biasing means engaging the at least one catch member and forcing it into the open space of the tubular housing (53) for preventing one of the heads (6, 52) from being removed and a second position where the collar (54) is pressable by an operator to overcome the force of the biasing means, the collar (54) being disengageable from the at least one catch member so that the catch member is moveable out of the tubular housing (53) for allowing one of the heads (6, 52) to be added or removed.

14. A multifunctional portable device (1) as claimed in any one of the preceding claims, wherein the attachment means (6, 51) is formed for detachably receiving one or more heads (6, 52) comprising any one of or any combination of a head (52) for cleaning wing mirrors, a head for scraping ice from wing mirrors and windscreens, a head for adjusting the position of straps and a vehicle steering wheel engaging head (6).

15. A multifunctional portable device (1) as claimed in any one of claims 12 to 14, wherein a free end of a shaft of the one or more heads (6, 52) has an adapter (61) for operable engagement with the attachment member (51) of the device (1).
